# EUROPEAN PATENT SPECIFICATION

(11) **EP 3 053 778 B1**
(45) Date of publication and mention of the grant of the patent: **23.10.2019**
(21) Application number: 15382039.4
(22) Date of filing: 04.02.2015
(51) Int. Cl.: B60Q 3/74, B60Q 3/54, B60Q 3/64, F21V 8/00, B60Q 3/217

(54) **Luminous decorative assembly for vehicle interior**
Leuchtende Zieranordnung für einen Fahrzeuginnenraum
Ensemble décoratif lumineux pour intérieur de véhicule

(43) Date of publication of application: 10.08.2016
(73) Proprietor: Grupo Antolin-Ingenieria, S.A., 09007 Burgos (ES)
(72) Inventor: Pérez, Silvia, 09007 Burgos (ES); Lugo, Omar, 09007 Burgos (ES); Antolin, Adelaida, 09007 Burgos (ES); Pérez, Álvaro, 09007 Burgos (ES); Torre, Diego, 09007 Burgos (ES)
(74) Representative: Capitán García, Maria Nuria

(56) References cited:
- EP-A1- 2 415 639
- EP-A1- 2 786 899
- ES-A1- 2 500 740
- FR-A1- 2 912 095

## Description

### TECHNICAL FIELD OF THE INVENTION

The present invention relates to a luminous decorative assembly for vehicle interior which permits an on state, wherein a luminous motif which may decorative and/or indicative is shown, and an off state, wherein it looks like a conventional decorative assembly whose appearance is opaque such that it keeps both the luminous motif and the lighting device concealed, such that an effect that is unexpected and surprising for the occupants of the vehicle is created.

Additionally, the invention relates to a luminous decorative assembly comprising a luminous support having an area from which it is capable of emitting a uniformly distributed light, and a decorative covering having an opaque appearance which permits the passage of the light it receives from the luminous support when the latter is in an on state, and which keeps both the luminous motif and the lighting device concealed when the latter is an off state, thereby permitting to make, on the one hand, the structural part that holds the components of the lighting device and, on the other, the decorative part that holds the motif, as well as all the other decorative elements that will be perceived by the occupants of the vehicle, independent.

In turn, the luminous support comprises a lighting device which consists in a distributed light source comprising at least one LED and at least one light guide; and a support that supports and connects the assembly to the vehicle interior.

Additionally, the invention comprises a special configuration of the components that make up the luminous decorative assembly such that it allows the light emitted by the lighting device to be managed such that, as a result, a sharp luminous motif is obtained when the luminous decorative assembly is in its on state, maximizing also the harnessing of the light generated by the light source and allowing at the same time both the luminous motif and the lighting device to remain concealed behind the decorative covering when the luminous decorative assembly is in its off state.

### BACKGROUND OF THE INVENTION

One of the current trends to increase the comfort of the occupant sitting inside a vehicle consists in adding functions, such as the lighting function, to the already existing decorative assemblies.

In some cases, it is interesting that the inclusion of said lighting function in the decorative assembly allow the components in charge of said function to be kept concealed when the light source is off.

Thus, when the light source is off, the decorative assembly looks like a conventional decorative assembly, such that the occupant does not perceive the components in charge of the lighting function.

This allows an unexpected effect to be created on the occupant of the vehicle when the decorative assembly goes from said off state to an on state.

One way to keep the components in charge of the lighting function concealed when the light source is not operating may be to use a translucent decorative covering, e.g. a fabric, in combination with a substrate where the light source is built in, such that said translucent decorative covering keeps the components in charge of the lighting function concealed. Some examples may be those disclosed in patents EP1418090, US2007019425 and EP2415639.

In these cases, a diffuse ambient, low-intensity lighting is achieved owing to a significant loss of light due to the placing of a translucent decorative covering between the light source and the vehicle passenger compartment which, on the one hand, diffuses the light it receives and, on the other, absorbs some of said received light, reasons why it would not be possible in these solutions to add a well-defined motif by means of the use of a mask situated e.g. between said translucent coating and the light source given that it would not be possible to obtain a sharp image thereof, i.e. an image formed by means of perfectly defined, and thus not diffuse, contours.

In order for the decorative assembly, in addition to keeping the components in charge of the lighting function concealed, to allow a luminous motif to be obtained instead of uniform lighting, wherein the motif is clearly defined, and without significant losses of light occurring due to the absorption of the latter by the decorative covering, said decorative covering may be drilled down to the level of the components in charge of the lighting function such that the transmitted light is that obtained directly from said components in charge of the lighting function.

In these cases, at least one portion of the decorative covering situated in correspondence with the components in charge of the lighting function is opaque in order to create a mask effect, such that the passage of light is hindered in the areas lacking drill holes, whereas the light exit is located and configured to achieve the projection of a given luminous motif.

Examples of this solution may be those disclosed in patents EP2572936 and JP59008546.

In these cases, an ambient or functional lighting is achieved wherein a sharp decorative or indicative luminous motif is shown, i.e. where the edge of said motif is clearly defined since there is no additional element situated between the lighting device and the light exit area of the decorative assembly to diffuse the light, i.e. the light is directly transmitted from the components in charge of the lighting function.

However, in these cases, when the decorative assembly is in an off state, even though the components in charge of the lighting function are virtually concealed, the decorative motif is still visible for the occupant, so an unexpected and surprising effect is not created for the occupants of the vehicle.

In order to create a truly unexpected and surprising effect, both the components in charge of the lighting function and the decorative motif may be kept concealed such that the sight of the luminous motif by the occupant is only possible when the light source is in operation.

In this case, there are solutions known wherein the luminous decorative assembly comprises an opaque-appearance decorative covering which permits the passage of light therethrough without a diffusion effect taking place, a mask that allows a certain motif to be defined concealed behind the decorative covering, and a light source situated adjacent to the mask that allows to define said motif on the decorative covering only when it is in an on state.

Examples for illustrating the lighting solution described above are disclosed in US6160475 and US8113695.

On the one hand, none of these examples deals with the problems of concealing the lighting device or the light source, their shape and/or their position, such that they are not perceived by an occupant of the vehicle from any angle of vision when the light source is on, and particularly in those cases where the lighting device or the light source emits point fluxes of light beams, or 'hot spots', in correspondence with the areas of the mask which permit the passage of light.

EP2786899 discloses a luminous decorative assembly for vehicle interiors comprising a decorative covering and a luminous support. The decorative covering in turn comprises a transmissive body formed by a resin molded item containing a diffusion material which allows concealing the lighting device or the light source.

On the other hand, none of the luminous decorative assemblies disclosed in the aforementioned examples is capable of managing the light such that it permits the projection of a sharp luminous motif when the decorative assembly is in its on state, maximizing also the harnessing of the light generated by the light source and allowing at the same time the motif, the structural support, and the lighting device to stay concealed behind the decorative covering when the lighting device is in its off state.

Therefore, in view of said background, a luminous decorative assembly for automotive vehicle interior which in an off state has an opaque appearance that conceals both the luminous support and the motif and which in an on state shows said luminous motif in a sharp manner, i.e. formed by perfectly defined contours, such that it provides a good perceived quality, maximizing also the harnessing of the light generated by the point light source through the lighting device and fully concealing the components situated behind the decorative covering and in particular those comprising the lighting device when the light source is both off and on, and is also adaptable at a low cost to different vehicle models based on its outer finish and/or the type of motif used, has been considered to be the object of the invention.

### DESCRIPTION OF THE INVENTION

Hence, the present invention relates to a luminous decorative assembly for automotive vehicle interior according to claim 1.

The term opaque appearance means that, when the light source is not operating, i.e. when the luminous decorative assembly is in an off state and is situated in its mounted position in the vehicle interior, the usual ambient light conditions in the passenger compartment of said vehicle being taken into account, the light-transmitting decorative element conceals both the mask and the components of the luminous support it covers, such that the occupant of the vehicle is not able to see or perceive them; however, when the light source operates, i.e. when the luminous decorative assembly is in an on state, the light is transmitted through the light-transmitting decorative element, permitting the projection of a luminous motif visible for the occupant onto the front side of the decorative covering.

The term transparent refers to the optical property of an element whereby said element permits the passage of visible light, such that objects can be seen therethrough in a sharp manner, i.e. objects defined by perfectly defined, and thus not diffuse, contours. Therefore, said property stays the same regardless of the amount of light that the transparent element lets through.

The presence of air between the light guide and the support consists in a continuous air layer, in the case where said light guide and said support are not in contact except in the areas where both components are attached.

When it is indicated that the position of the at least one LED is not in correspondence with the luminous areas of the surface occupied by the luminous motif, it must be understood that said LED is outside the projected area of said luminous areas on the light guide, such that the transmission of light towards the front side of the decorative covering is not carried out in a direct manner from the LED but in an indirect manner through the light guide.

When it is indicated that the light guide and the decorative covering are not in contact along an area of the front side of the light guide situated in correspondence with the light extraction means, it must be understood that there exists no contact between both elements along the area of the front side of the light guide onto which the light extraction means situated on the rear side of said light guide are projected.

On the other hand, a distinction is made between the terms 'vehicle passenger compartment' and 'vehicle interior', the former being the area of the vehicle that receives the light transmitted by the luminous decorative assembly and from which the occupant of the vehicle is capable of seeing the front side of the luminous decorative assembly, and the latter, i.e. the term defined as the vehicle interior, the part of the vehicle to which the luminous decorative assembly of the invention is attached and thus concealed from the occupant of the vehicle when the luminous decorative assembly is in its mounted position in said vehicle interior.

The characteristic relating to the location of the light diffusion means between the mask and the light guide is not limited to a configuration wherein there are no other elements between the mask and the light guide apart from the diffusion means. Therefore, there may be other elements between the light guide and the mask in addition to the diffusion means.

The luminous decorative assembly for automotive vehicle interior of the invention has a first appearance when the luminous support is in an off state and a second appearance when the luminous support is in an on state.

When the luminous decorative assembly has a first appearance, or day effect, in its off state, it keeps both the mask and the luminous support concealed, such that said luminous decorative assembly has the same appearance as a conventional decorative assembly that does not comprise an associated lighting function.

Thus, one object of the invention is to achieve an unexpected and surprising effect on the occupant when the luminous decorative assembly adopts a second an appearance, or night effect, wherein the motif is projected onto the front side of the decorative covering.

In addition to achieving an unexpected effect on the occupant consisting in a change in the appearance of the luminous decorative assembly by means of the projection of a luminous motif thereon, another of the objects of the invention is for said projection to be carried out by means of a perfect definition thereof via its contour. That is, the projection of a sharp motif having a good light intensity that promotes said definition by contrast.

It is important to bear in mind that the decorative coverings that are employed to be able to achieve an unexpected light effect, i.e. coverings which are capable of keeping the lighting device concealed when the lighting source is not in operation, absorb some of the light they receive. This results in a loss of the luminous intensity transmitted by the luminous support to the decorative covering when the light goes through said decorative covering.

Hence, in order to fulfill the object of the invention consisting in ensuring a good luminous intensity, it is very important to establish a control of the management of the light in the luminous support that is part of the luminous decorative assembly such that a maximum harnessing of the generated light is achieved and the losses are minimized.

To promote said harnessing of the light, the use of a light guide to distribute the light emitted by the LED contributes to establish a good distribution and harnessing of the light along the surface formed by the motif at a low cost since the light source used is a point source which is easier to control than other, more expensive light sources such as OLEDs or electroluminescent elements.

On the other hand, the use of means for recovering the light that is transmitted through the rear side of the light guide allows the harnessing of the light that escapes through the rear side of the light guide to be improved since most of said light is reintroduced in the light guide.

As a direct result of the above, the light guide is capable of distributing a greater amount of distributed light.

Additionally, the fact that the light guide is not in contact with the decorative covering along an area of the front side of the light guide situated in correspondence with the light extraction means and the fact that there is air between the light guide and the support, such that the light guide is surrounded by air, contribute to improve the harnessing of the light emitted by the light source owing to most of the light that enters said light guide being reflected inside it according to the total internal reflection phenomenon since the refractive index of the light guide is greater than the refractive index of the air that surrounds it.

Thus, a controlled, uniform extraction of the light distributed by the light guide can be carried out via the light extraction means by projecting it towards the decorative covering.

Hence, the special combination and arrangement of the different elements that are part of the luminous support and have been described up to now permits a maximum harnessing and a distribution of the light that is transmitted from said luminous support to the decorative covering by means of the use of at least one point, simple, inexpensive and easy-to-control LED that emits light.

In addition to all the above, and as far as the management of the light is concerned, the luminous decorative assembly of the invention, and particularly the luminous structural support that is part of the former, comprises light retaining means that prevent the emission of light through the contour of the luminous support.

Apart from preventing an unwanted lighting effect in the contour of the luminous decorative assembly, this permits a contrasted, defined projection of the luminous motif onto the front side of the decorative covering that makes the occupant focus his attention on said luminous motif.

With regard to object of the invention consisting in the projection of a sharp luminous motif onto the front side of the luminous decorative assembly, the particular configuration of the decorative covering of the invention also allows a good management of the light to be carried out, it being understood in this case as that management that permits a projection of a clearly defined luminous motif onto the front side of the decorative covering or, in other words, onto the first front side of the luminous decorative assembly.

First of all, the use of a mask allows the luminous motif to be sharp, i.e. to be formed by perfectly defined contours.

This is due to the mask having two areas having a different degree of light transmission, one area which allows the light it receives to be transmitted and another area which prevents the passage of the light it receives.

On the other hand, this motif formed by perfectly defined contours is projected onto the front side of the decorative covering without there being hardly any loss of said definition owing to the location of the mask in the decorative covering, i.e. in the area of the luminous decorative assembly in charge of transmitting the light to said front side of the decorative covering.

This allows a good definition of the luminous motif to be maintained in the area where the light goes outside the luminous decorative assembly and, therefore, said luminous motif to be projected onto the front side thereof maintaining said definition. Thus, the occupant sees a well-defined luminous motif on the front side of the luminous decorative assembly when the luminous decorative assembly is in an on state.

Additionally, the fact that there are no light diffusion means between the mask and the front side of the decorative covering where the luminous motif is projected prevents the distortion of the luminous motif, especially of the contour of said luminous motif, and contributes to ensure the sharp definition of the luminous motif when it is projected onto the front side of the decorative covering.

On the other hand, the fact that the transparent support does not diffuse the light that goes therethrough allows the mask to be arranged on both the front side thereof and its rear side and, at the same time, the sharpness of the motif projected onto the front side of the decorative covering to be maintained. Thus, the decorative covering is a versatile element that offers a high number of design possibilities.

Another object of the invention consists in improving the appearance of the luminous decorative assembly that is perceived by the occupant when the luminous decorative assembly is in an on state versus the solutions known in the state of the art by means of the full concealment of the lighting device when the latter comprises an on state.

In addition to improving the distribution of the light transmitted through the light guide, the use of light diffusion means situated between the mask and the light guide allows the position of the light extraction means where the point fluxes of light beams, or 'hot spots', concentrate to be concealed, thereby concealing the lighting device from any angle of vision when the luminous decorative assembly is in an on state.

Furthermore, the LED or LEDs that are part of the lighting device are not visible to the occupant either since the position of said LED or LEDs is not in correspondence with the luminous areas of the surface occupied by the luminous motif that match the first area of the mask permitting the passage of light. This makes it impossible for an occupant to be able to see or perceive the LED or LEDs that are part of the lighting device through said area of the mask that permits the passage of light when said lighting device is in an on state.

Another object of the invention consists in the versatility or adaptability of the luminous decorative assembly to different vehicle models comprising different decorative coverings and/or different luminous motifs.

The luminous decorative assembly of the invention comprises a decorative covering and a luminous support joined together, wherein the decorative covering has an essentially decorative function and conceals all the components that are part of the luminous support and is, additionally, interchangeable according to the aesthetic finish of the vehicle passenger compartment, and wherein the luminous support has a structural function and a lighting function and is concealed behind the decorative covering.

The luminous support has a structural function in that it has the purpose of supporting the entire assembly and establishing the connection of said assembly with the vehicle interior via the first attachment means.

This means that said luminous support has a high technical complexity derived from a complex design e.g. due to the presence of stiffeners and/or suitable materials which make it capable, owing to their own structural characteristics or to those enhanced by the use of reinforcing fillers, of fulfilling said structural function. Therefore, these characteristics make it hard for the luminous support to be modifiable at a low cost.

On the other hand, the luminous support is compatible with different vehicle models comprising different aesthetic finishes and/or different motifs because said element remains concealed behind the decorative covering in its mounted position, and thus does not have a decorative function, and because the lighting device extends at least along the surface occupied by the motif, including the luminous areas and the non-luminous areas that are part thereof.

On the other hand, the decorative covering whose function is mainly decorative comprises a component of a low technical complexity, which means this element is an element can be modified at a low cost.

It is convenient for this decorative covering to be easily modifiable in order to give continuity to the aesthetics of the vehicle passenger compartment bearing in mind the different aesthetic options, which will depend on both the different aesthetic finishes of the decorative covering and the different luminous motifs, without this affecting the other elements that make up the decorative assembly, i.e. without the luminous support being affected.

Therefore, the fact that the decorative covering that makes up the luminous decorative assembly makes the structural and luminous functions independent from the decorative function in two different, independent elements allows said assembly to be suitable for different vehicle models via the modification of the decorative covering only.

### DESCRIPTION OF THE FIGURES

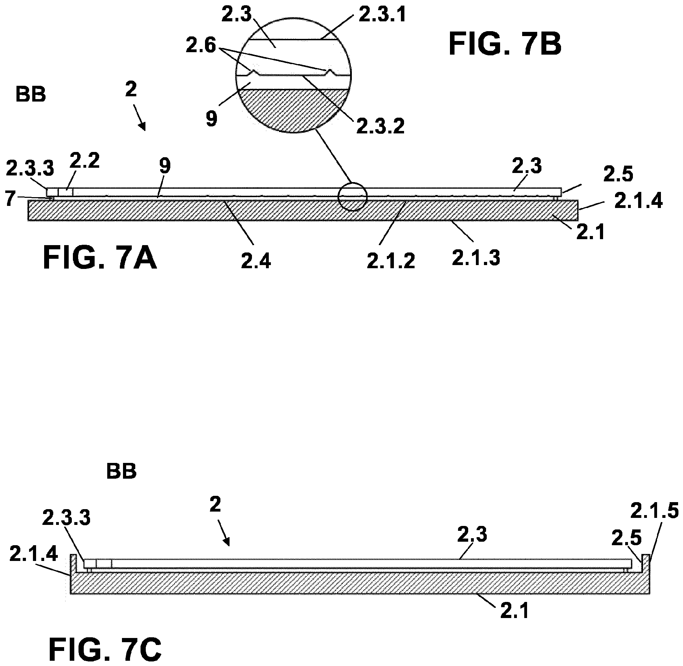

The present specification is complemented with a set of figures, illustrative of the preferred example of, and never limiting, the invention.
Figure 1 depicts an exploded view of the front side of the luminous decorative assembly where both the decorative covering and the luminous support can been seen, wherein longitudinal section AA of the decorative covering is indicated. In this figure, the luminous decorative assembly is in an on state.
Figure 2 depicts an exploded view of the rear side of the luminous decorative assembly where both the decorative covering and the luminous support can be seen. In particular, both the second attachment means situated on the luminous support and the mask situated on the decorative covering can be seen, wherein longitudinal section BB of the luminous support is shown.
Figure 3 shows a perspective view of the luminous decorative assembly in a mounted position of the decorative covering and the luminous support, wherein longitudinal section CC is indicated. In this figure, the luminous decorative assembly is in an off state.
Figure 4 shows a view of the section CC depicted in Figure 3 according to a variant of the invention, wherein the diffusion means are part of the decorative covering.
Figure 5 shows a view of the section CC depicted in Figure 3 according to a variant of the invention, wherein the diffusion means are part of the decorative covering.
Figures 6A-6F show six sectional views corresponding to six variants of the decorative covering according to the invention, according to the section AA depicted in Figure 1.
   In particular, Figure 6A shows a schematic sectional view of a first variant of the decorative covering, wherein a transparent support and a light-transmitting decorative element are formed from a single element, and wherein a mask is joined to the rear side thereof.
   Figure 6B shows a schematic sectional view of a second variant of the decorative covering, wherein a transparent support and a light-transmitting decorative element are formed from two different, joined elements, and wherein a mask is joined to the rear side thereof.
   Figure 6C shows a schematic sectional view of a third variant of the decorative covering, wherein a transparent support and a light-transmitting decorative element are formed from two different elements in between which a mask is arranged.
   Figure 6D shows a schematic sectional view of a fourth variant of the decorative covering, wherein a transparent support and a light-transmitting decorative element are formed from a single element, and wherein a mask is joined to the rear side thereof, according to the configuration depicted in Figure 6, wherein in addition said decorative covering comprises light diffusion means joined to the rear side of the mask.
   Figure 6E shows a schematic sectional view of a fifth variant of the decorative covering, wherein a transparent support and a light-transmitting decorative element are formed from a two different, joined elements, and wherein a mask is joined to the rear side of the decorative covering, according to the configuration depicted in Figure 6B, wherein in addition said decorative covering comprises light diffusion means joined to the rear side of the mask.
   Figure 6F shows a schematic sectional view of a sixth variant of the decorative covering, wherein a transparent support and a light-transmitting decorative element are formed from two different elements, in between which a mask is arranged, according to the configuration depicted in Figure 6C, wherein in addition said decorative covering comprises light diffusion means joined to the rear side of the transparent support.
Figures 7A-7F show sectional views of the luminous support corresponding to five variants of said luminous support, according to the section BB depicted in Figure 2.
   In particular, Figure 7A shows a schematic sectional view of the first variant of the luminous support, wherein the lighting device is joined to the support via the third attachment means such that there is only contact between the lighting device and the support in the area where both elements are attached.
   In addition, said Figure 7A shows light recovering means situated on the front side of the support and light retaining means situated on the contour of the light guide.
   Figure 7B shows a detailed view of Figure 7A where the light extraction means that are part of the lighting device situated on the rear side of the light guide are shown. In this particular case, said light extraction means are formed from a set of prisms distributed along the rear side of the light guide.
   Figure 7C shows a schematic sectional view of a third variant of the luminous support, wherein the latter comprises on its two ends walls that protrude from said ends towards the decorative covering. In this embodiment, the light retaining means are formed on the inner side situated closest to the lighting device of said protruding walls.

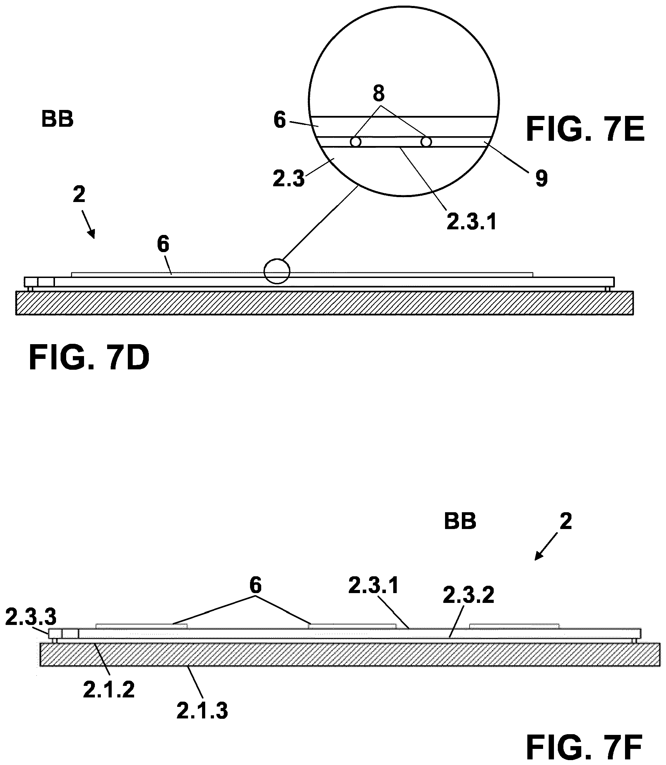

   Figure 7D shows a schematic sectional view of a fourth variant of the luminous support, wherein the latter in addition comprises light diffusion means joined via fourth attachment means to the front side of the light guide. According to this embodiment, the light diffusion means continuously extend along the front side of the light guide and, particularly, in correspondence with the surface occupied by the motif defined in the mask.
   Figure 7E shows a detailed view of Figure 7D where the joint between the front side of the light guide and the light diffusion means via the fourth attachment means is shown, such that the contact between said light diffusion means and the light guide is discontinuous and point-like, which permits the presence of air between both elements in order to foster the total internal reflection phenomenon of the light guide.
   Figure 7F shows a schematic sectional view of a fifth variant of the luminous support, wherein the light diffusion means discontinuously extend along the front side of the light guide, such that said light diffusion means are in correspondence with the first area of the mask that permits the passage of light.

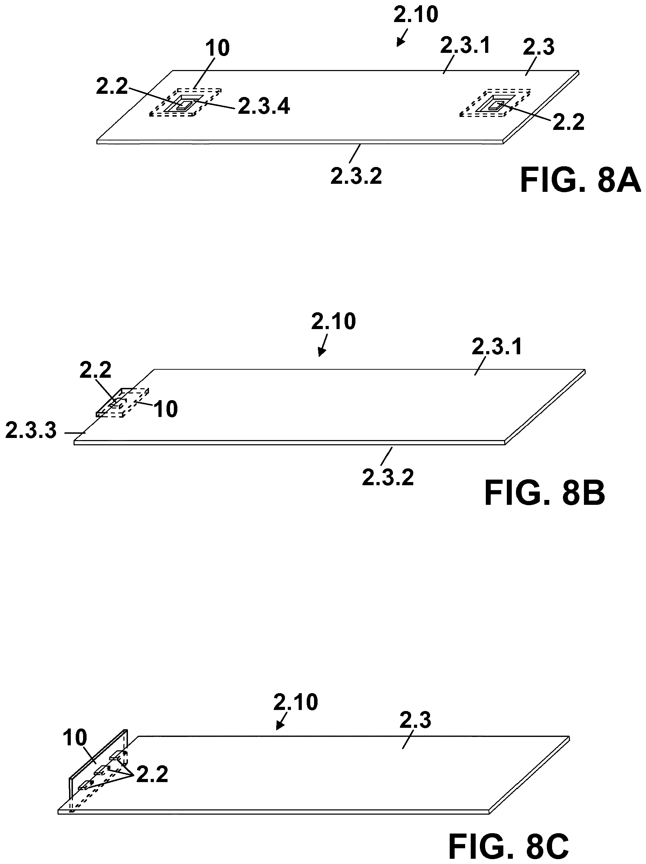

Figures 8A-8E show five variants of the lighting device taking both the configuration of the LED or LEDs and of the light guide or guides, as well as their relative position, into account.
   In particular, Figure 8A shows a first variant of the lighting device of the invention, wherein the light guide has two through openings in the shape of an elongated hole, in correspondence with each one of the opposite ends of the light guide, wherein at least one LED of the side emission type is housed in each one of them, such that the printed circuit board, or PCB, where it is connected is arranged in parallel and in contact with the rear side of the light guide.
   Figure 8B shows a second variant of the lighting device of the invention, wherein the LED is also of the side emission type and is arranged in correspondence with a section of the contour of the light guide, it being possible for said LED to be partially housed in a cavity (not depicted) envisaged in the light guide, or not, such that the printed circuit board where the LED is connected is arranged in parallel and in contact with the rear side of the light guide, as in the first variant shown in Figure 8A.
   Figure 8C shows a third variant of the lighting device of the invention where a set of LEDs of the front emission type have been depicted, such that the printed circuit board where they are connected is perpendicularly arranged with regard to the light guide and in correspondence with a section of the contour of said light guide, it being possible for the LEDs to be partially housed in the cavity envisaged (not depicted) in the light guide, or not.

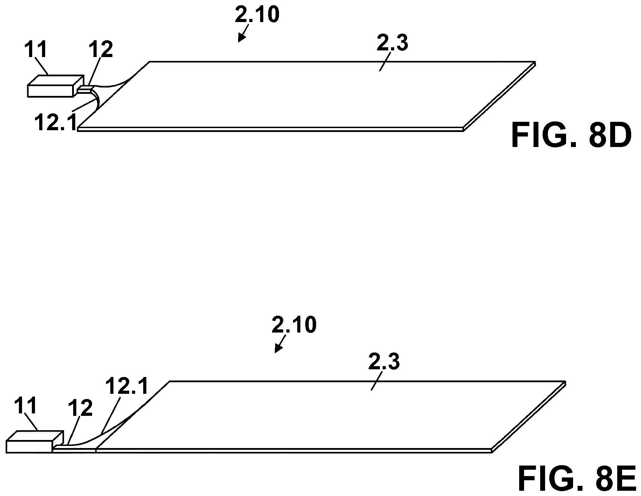

   Figure 8D shows a fourth variant of the lighting device of the invention, wherein the LEDs are housed in a lighting module which houses both the printed circuit board and said LEDs. Said module is coupled to the light guide via a connector which has the capacity to conduct the light therethrough until it reaches the light guide. In this fourth variant, the module is coupled to the light guide via a central area of a section of the contour of the light guide.
   Figure 8E shows a fifth variant of the lighting device of the invention, wherein the LEDs are also housed in a lighting module which houses both the printed circuit board and said LEDs. In this fifth variant, the module is coupled to the light guide via an end of a section of the contour of the light guide.

### DETAILED DESCRIPTION OF THE INVENTION

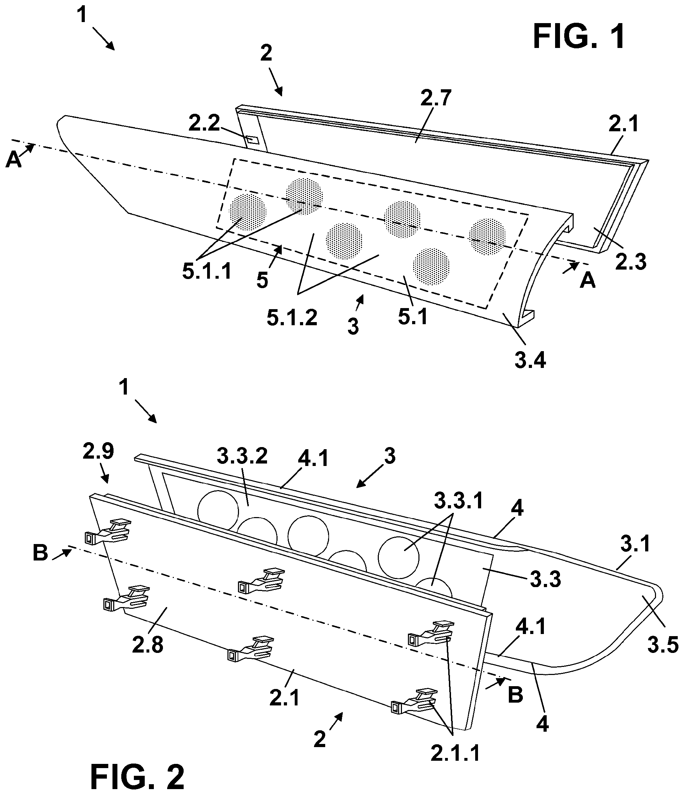

As Figure 1 shows, the luminous decorative assembly (1) of the invention comprises a luminous support (2) which supports and connects the entire assembly to the vehicle interior via second attachment means (2.1.1), depicted in Figure 2, and a decorative covering (3) which configures the exposed face of the luminous decorative assembly (1) and keeps the luminous support (2) concealed.

Both elements (2, 3) are joined via first attachment means (4) which permit the final configuration of the luminous decorative assembly (1).

In the particular embodiment depicted by way of example in Figure 2, the first attachment means (4) comprise resilient walls (4.1) which protrude with regard to contour of the decorative covering (3) and towards the luminous support (2) and allow the luminous support (2) to be retained by flexibility.

On the other hand, the first attachment means (4) could comprise another kind of mechanical attachment, such as clips, an adhesive attachment or a heat-welded attachment.

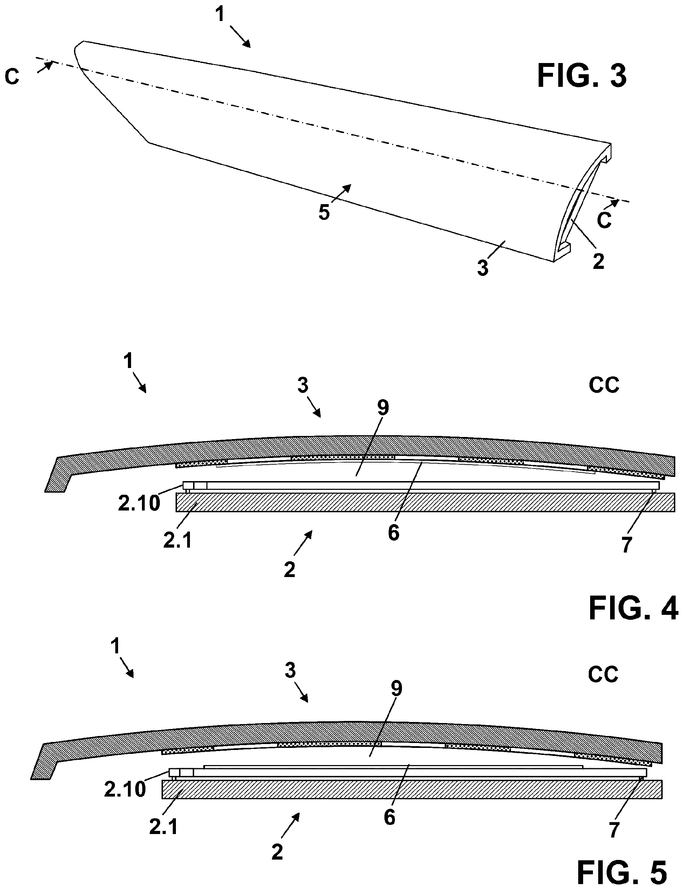

The luminous decorative assembly (1) of the invention can operate between an on state, wherein it shows a luminous motif (5) which occupies a surface (5.1), depicted in Figure 1, formed by the combination of luminous areas (5.1.1) and non-luminous areas (5.1.2), and an off state, wherein the motif is neither visible nor perceivable by the occupant of the vehicle, as can be seen in Figure 3.

On the other hand, the luminous support (2) that is part of the luminous decorative assembly (1) comprises a front side (2.7) closest to the vehicle passenger compartment and a rear side (2.8) farthest from the vehicle passenger compartment, wherein said front and rear sides (2.7, 2.8) of the luminous support (2) are joined together along a contour (2.9) of the luminous support (2) delimiting said front and rear sides (2.7, 2.8) of the luminous support (2).

The luminous support (2) can operate between an on state, emitting light, and an off state, wherein said on and off states correspond to the on and off states of the luminous decorative assembly (1).

The luminous support (2) mainly comprises a support (2.1) and a lighting device (2.10) connected via third attachment means (7), which are schematically depicted in e.g. Figures 4 and 5.

Said third attachment means (7) may comprise e.g. a mechanical attachment, an adhesive attachment or a heat-welded attachment.

As can be seen e.g. in Figure 7A, the support (2.1) comprises a front side (2.1.2) closest to the vehicle passenger compartment and a rear side (2.1.3) farthest from the vehicle passenger compartment, which are joined together along a contour (2.1.4) of the support delimiting said front and rear sides (2.1.2, 2.1.3) .

On the other hand, the support (2.1) in turn comprises second attachment means (2.1.1), depicted in Figure 2, situated on its rear side (2.1.3), for attaching both the luminous support (2) itself and the decorative covering (3) to the vehicle interior, i.e. for establishing the attachment of the luminous decorative assembly (1) to the vehicle interior.

Even though it has not been depicted, the vehicle interior may comprise an interior vehicle component attached to the frame (not depicted) of the vehicle, such as e.g. a door panel, a ceiling lining, a side wood panel, etc., attached to the frame of the vehicle, or said vehicle interior may directly comprise the frame of the vehicle, i.e. the luminous decorative assembly (1) may be directly joined to the frame of the vehicle.

In this latter case, the support (2.1) that is part of the luminous decorative assembly (1) may comprise the main body of the interior vehicle component, examples of which have been mentioned in the preceding paragraph.

Said second attachment means (2.1.1) may be built in the support (2.1) or may be joined to said support (2.1) by means of a known attachment means.

Therefore, in addition to supporting the luminous decorative assembly (1), the support (2.1) connects it to the vehicle interior. This is why one of the functions of the luminous support (2), to which said support (2.1) belongs, is the structural function.

This means that said support (2.1), and thus said luminous support (2), has a high technical complexity derived from a complex design e.g. due to the presence of stiffeners and/or suitable materials which, owing to their own structural characteristics or to those enhanced by the use of reinforcing fillers, make it capable of fulfilling said structural function.

Said support (2.1) may comprise e.g. an element molded from a plastic material, although it could also comprise an element molded from a metallic material.

On the other hand, the luminous support (2) also comprises a lighting device (2.10), which allows said luminous support to perform a luminous function in addition to the structural function.

Said lighting device (2.10) is situated on the front side (2.1.2) of the support (2.1) and comprises at least one LED (2.2) as a light source for generating light and at least one light guide (2.3) for uniformly distributing the light generated by the at least one LED (2.2) .

The at least one LED (2.2) in charge of generating and emitting light towards the light guide (2.10) operates between an on state and an off state which correspond to the on and off states of the luminous decorative assembly (1) and the luminous support (2).

Said LED (2.2) occupies a position which is not in correspondence with the luminous areas (5.1.1) of the surface (5.1) occupied by the luminous motif (5), i.e. it is not facing them, and thus it is not possible for the occupant to see or perceive the shape and/or position of the LED (2.2) when said LED (2.2) is in an on state since it is concealed by an opaque element which e.g. may be the mask (3.3) in charge of defining the motif (5), and which will be discussed below, or any other opaque element.

On the other hand, the lighting device (2.10) may comprise a LED (2.2), as can be seen in Figure 8B, or several LEDs, as can be seen in Figures 8A and 8C. In this latter case, said LEDs (2.2) may by distributed in correspondence with two opposite ends of the light guide (2.3), as Figure 8A shows, or may be situated in correspondence with the same end of the light guide (2.3), as Figure 8C shows.

Said LEDs (2.2) may also emit single-color light or multicolored light.

The number, the color and the position of the LEDs (2.2) that are part of the lighting device (2.10) will depend on the light and/or aesthetic needs of the luminous decorative assembly (1).

As regards the configuration of the LEDs (2.2), they can be side emission LEDs, as figures 8A and 8B show, or they can be front emission LEDs, as Figure 8C shows. The choice of the type of the LED (2.2) will depend on the light needs and the geometry of the luminous decorative assembly (1).

As for the light guide (2.3) that is part of the lighting device (2.10), and as can be seen in Figure 1, said light guide (2.3) extends at least along the surface (5.1) occupied by the luminous motif (5), i.e. along both the luminous areas (5.1.1) of said surface (5.1) and the non-luminous areas (5.1.2) thereof.

Thus, the light guide (2.3) is suitable and therefore allows the luminous motif (5) to be configured according to the different geometric options of said luminous motif (5) without there being a need to modify the luminous support (2).

As can be seen e.g. in Figure 7F, the light guide (2.3) comprises a front side (2.3.1) closest to the vehicle passenger compartment and a rear side (2.3.2) farthest from the vehicle passenger compartment, which are joined together along a contour (2.3.3) of the light guide (2.3) delimiting said front and rear sides (2.3.1, 2.3.2).

The light guide (2.3) may comprise a plate of plastic material such as e.g. poly(methyl methacrylate) (PMMA) or polycarbonate (PC), preferably flat so as to occupy a small space, although, depending on the geometry of the luminous decorative assembly (1), it may be molded according to the shape of said luminous decorative assembly (1).

The light guide (2.3) allows the light emitted by the LED (2.2) to be uniformly transmitted and distributed along its length so that the latter may be transmitted in a distributed manner in a subsequent stage through the front side (2.3.1) of said light guide (2.3) towards the decorative covering (3).

In order to carry out the light connection between the at least one LED (2.2) and the light guide (2.3) such that the light generated by said LED (2.2) may be distributed by the light guide (2.3), said LED (2.2) is arranged on a printed circuit board (10), or PCB, which in turn is coupled to the light guide (2.3), as shown in Figures 8A, 8B and 8C, or they may be arranged inside a lighting module (11) which houses the printed circuit board (10) and the LED or LEDs (2.2), as shown in Figures 8C and 8D.

For purposes of clarity, the hidden lines corresponding to both the printed circuit board (10) and the LEDs (2.2) are depicted by means of broken lines in Figures 8A, 8B and 8C.

In particular, the configuration depicted in Figure 8A shows an example wherein the lighting device (2.10) comprises two LEDs (2.2) of the side emission type, each of them situated on an opposite end of the light guide (2.3).

In this case, the light guide (2.3) has two through openings (2.3.4) in the shape of an elongated hole which extend from the front side (2.3.1) thereof to its rear side (2.3.2) where the LEDs (2.2) are at least partially housed, such that the printed circuit boards (10) are arranged in contact with the rear side (2.3.2) of the light guide (2.3), their having a parallel arrangement with regard thereto in the case where said light guide (2.3) has a flat configuration as that depicted in the figures.

From the point of view of the assembly of the components that make up the lighting device (2.10), this configuration is particularly advantageous since the elongated hole (2.3.4) helps to position the LED (2.2) with regard to light guide (2.3), and the flat arrangement of the printed circuit board (10) with regard to the light guide (2.3) makes it easier to maintain said position by means of the contact of the printed circuit board (10) with the rear side (2.3.2) of the light guide (2.3).

This aspect of the positioning of the components that make up the lighting device (2.10) is particularly relevant since it conditions the good operation of the lighting device (2.10) and the maximum harnessing the luminous intensity of the LEDs (2.2).

The configuration shown in Figure 8B shows an example wherein the lighting device (2.10) comprises a single side emission LED (2.2).

In this case, the printed circuit board (10) that supports the LED (2.2) also has a parallel arrangement with regard to light guide (2.3), which makes it easier to position and maintain the position of said printed circuit board (10), and thus that of the LED (2.2), with regard to light guide (2.3).

However, in this case the LED (2.2) is situated next to the contour (2.3.3) of the light guide (2.3), and it may also be partially housed in said light guide (2.3), in a cavity (not depicted) thereof situated in said contour (2.3.3) of the light guide (2.3).

The configuration shown in Figure 8C shows an example wherein the lighting device (2.10) comprises a set of three front emission LEDs (2.2). In this case, the printed circuit board (10) has a perpendicular arrangement with regard to the light guide (2.3).

The advantage of this case is the fact that side emission LEDs (2.2) have a greater luminous intensity than front emission LEDs (2.2).

However, from the point of view of the capacity of assembly and the positioning of the printed circuit board (10) with the LEDs (2.2) with regard to the light guide (2.3), it might be more complicated given its perpendicular arrangement. On the other hand, said perpendicular arrangement also results in an increase of the space occupied by the lighting device (2.10).

However, this configuration may be feasible in some applications of the luminous decorative assembly (1) of the invention where space is not a constraint.

Finally, the configurations shown in Figures 8D and 8E show a lighting module (11) which houses both the printed circuit board (10) and the LEDs (2.2).

Said lighting module (11) is coupled to the light guide (2.3) via a connector (12) which has the capacity to conduct the light therethrough until it reaches the light guide (2.3) in charge of distributing it.

Said connector (12) may comprise e.g. a prismatic or cylindrical light guide that permits the total internal reflection of the light in order to maximize the harnessing thereof. On the other hand, said connector (12) may be made up by an additional element joined to the light guide (2.3) or may be built in said light guide (2.3) forming a single body.

In addition to permitting the coupling between the lighting module (11) and the light guide (2.3), this connector (12) is particularly advantageous in the case where said lighting module (11) emits multicolored light, since the multicolored light emitted by the combination of light from at least two LEDs (2.2) emitting light of different colors has to be homogeneously mixed until the desired color is obtained.

Therefore, the connector (12) is of sufficient length to carry out said homogenization of the light, such that the entire surface of the light guide (2.3) may be used to distribute the light of the desired color.

On the other hand, the connector (12) has on its end closest to the light guide (2.3) a curved section (12.1) whose purpose is to direct the light towards the light guide (2.3) such that the latter extends along the entire width of the entry surface thereof, in an attempt to maximize the use of the surface of the light guide (2.3) .

Once the light has been transmitted and distributed along the light guide (2.3), it must be extracted from said light guide (2.3) in a distributed manner and directed towards the decorative covering (3).

In order to promote the controlled extraction of the light, the light guide (2.3) is surrounded by air (9) to foster the total internal reflection phenomenon.

To this end, on the one hand, the light guide (2.3) is not in contact with the decorative covering (3) at least along an area of the front side (2.3.1) of the light guide (2.3) situated in correspondence with the light extraction means (2.6), as can be seen in Figures 4 and 5, such that there is air (9) between both components (2.3, 3), and on the other, there is also air (9) between the light guide (2.3) and the support (2), it being possible for a layer of air (9) extending in a continuous manner to exist, as shown in Figure 7A.

In the case of Figure 7A, the light guide (2.3) and the support (2.1) are only in contact along the rear side (2.3.2) of said light guide (2.3) in the areas corresponding to the attachment of both elements carried out via the third attachment means (7). Therefore, there is air (9) between both elements (2.1, 2.3).

Furthermore, in this case the third attachment means (7) are situated on the rear side (2.3.2) of the light guide (2.3) and outside the area occupied by the light extraction means (2.6) such that said third attachment means (7) do not affect the path of the light distributed by the light guide (2.3).

The light extraction means (2.6) allow the light to be extracted from the light guide (2.3) such that the light may be homogeneously distributed along the surface formed by the front side (2.3.1) of the light guide (2.3).

In order to achieve a homogeneous distribution of the light and, consequently, a homogenous transmission thereof, the light extraction means (2.6) comprise localized surfaces which reflect the light they receive and direct it towards the outside of the light guide (2.3) through its front side (2.3.1), i.e. towards the decorative covering (3).

Said light reflecting surfaces may be distributed according to an irregular pattern promoting the homogenous distribution of the light depending on the number, the type and the position of the LEDs (2.2) that make up the lighting device (2.10).

The light extraction means (2.6) may comprise e.g. an etching of the light guide (2.3) on its rear side (2.3.2) in the shape of pyramids, as can be seen in the detail shown in Figure 7B, or in other geometric configurations that allow the light to be reflected towards the front side (2.3.1) of the light guide (2.3).

Said etching may be carried out during the process of manufacture of the light guide (2.3) such that the light guide (2.3) is molded taking the shape of the light extraction means (2.6) into consideration, or it may be carried out in subsequent stage to the manufacture of the light guide (2.3), i.e. by treating the rear side (2.3.2) of the light guide (2.3) once it is obtained.

On the other hand, the light extraction means (2.6) may comprise a treatment of the rear side (2.3.2) of the light guide (2.3), such as a localized screen printing or painting.

In addition to the support (2.1) and the lighting device (2.10), the luminous support (2) comprises means (2.4) for recovering the light that escapes through the rear side (2.3.2) of the light guide (2.3) in an unwanted manner, situated on the front side (2.1.2) of the support (2.1).

Said light recovering means (2.4) depicted in Figure 7A reflect the light that escapes through the rear side (2.3.2) of the light guide (2.3) such that it is reintroduced inside the latter.

Thus, the light emitted by the at least one LED (2.2) is better harnessed, thereby allowing the light guide (2.3), in conjunction with the light extraction means (2.6), to be able to distribute and transmit a greater amount of light in the desired direction, i.e. light directed towards the decorative covering (3) through the front side (2.3.1) of the light guide (2.3), bearing in mind the at least one LED (2.2) that is used as a light source is a simple point light source.

The light recovering means (2.4) may comprise a layer of reflective material, e.g. colored white, applied e.g. by screen printing or painting. Additionally, said layer of reflective material may be applied by applying a pigment to the plastic material that makes up the support (2.1), thereby causing a mass coloration of said support (2.1).

On the other hand, and as can be seen in Figures 7A and 7C, the luminous support (2) comprises light retaining means (2.5) which prevent the emission of light through the contour (2.9) of the luminous support (2) .

The main function of the light retaining means (2.5) is to prevent leaks of light towards the outside of the luminous decorative assembly (1).

In addition, said light retaining means (2.5) may have the additional function of recovering the light that escapes towards the outside of the light guide (2.3) through the contour (2.3.3) thereof.

Thanks to the light retaining means (2.5), an unwanted lighting effect is prevented on the contour of the luminous decorative assembly (1), which also allows the occupant to focus his attention on the luminous motif (5) projected onto the front side (3.4) of the decorative covering (3), boosting its contrast.

The light retaining means (2.5) may comprise a layer of opaque material, which may also be reflective, applied on either the contour (2.3.3) of the light guide, as shown in Figure 7A, or on the rear side of the contour (2.1.4) of the support (2.1), in the case where the latter has a wall (2.1.5) projecting towards the decorative covering (3) and partially enveloping the contour (2.3.3) of the light guide (2.3), as shown in the embodiment depicted in Figure 7C.

As has been explained up to now, the special configuration of each one of the components corresponding to the luminous support (2), as well as their location and relative position with regard to the other elements that make up both the luminous support (2) and the decorative covering (3), permit a management of the light that contributes to maximize the harnessing of the light emitted by the at least one LED (2.2), keeping in mind that the light source is a simple point element.

As explained above, the fulfillment of this object is essential since the decorative coverings that are employed to be able to achieve an unexpected light effect, i.e. coverings which are capable of keeping the lighting device (2.10) concealed when the lighting source is not in operation, absorb some of the light they receive, resulting in a loss of luminous intensity.

Therefore, the light managed in the luminous support (2) where a good harnessing thereof has taken place is transmitted to the decorative covering (3), wherein a new management of the light is carried out such that it allows the luminous motif (5) to be projected onto the decorative covering (3) according to perfectly defined contours, i.e. a sharply defined motif.

The decorative covering (3) has the particularity of having an opaque appearance when the luminous support (2) is in its off state and of letting the light through towards the vehicle passenger compartment when the luminous support (2) is in its on state.

Said decorative covering (3) comprises a front side (3.4) closest to the automotive vehicle passenger compartment and a rear side (3.5) farthest from the automotive vehicle passenger compartment.

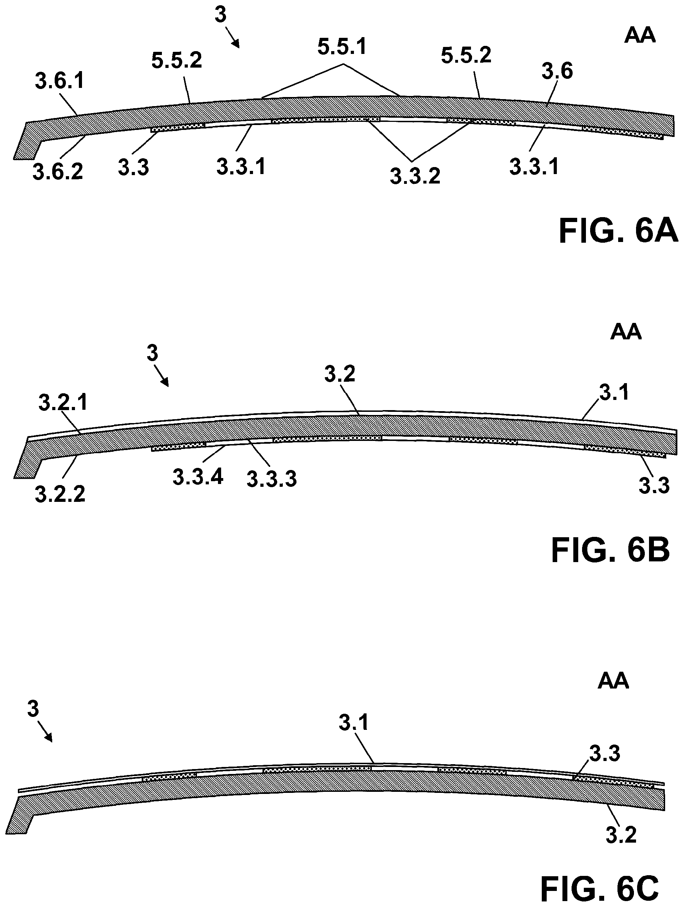

In turn, as shown in Figures 6A-6F, the decorative covering (3) comprises a mask (3.3) where a motif (5) is defined situated in contact with the transparent support (3.2, 3.6) and/or the light-transmitting decorative element (3.1, 3.6), a transparent support (3.2, 3.6) and a light-transmitting decorative element (3.1, 3.6).

Said mask (3.3) comprises a front side (3.3.3) closest to the vehicle passenger compartment and a rear side (3.3.4) farthest from the vehicle passenger compartment.

In order for the luminous motif (5) projected onto the front side (3.4) of the decorative covering (3) to be sharply defined, an essential characteristic of the decorative covering (3) is the presence of a mask (3.3) that defines the luminous motif (5) by means of the combination of a first area (3.3.1) of the mask (3.3) that permits the passage of light and a second area (3.3.2) of the mask (3.3) that prevents the passage of light, as shown in Figure 1, wherein the luminous motif (5) comprises a set of circles.

Another fundamental characteristic that allows said sharpness to be preserved once the luminous motif (5) has been defined through the mask (3.3) is that there are no elements that might diffuse the light between said mask (3.3) and said front side (3.4) of the decorative covering (3).

On the other hand, the location of the mask (3.3) on the decorative covering (3) instead of on the luminous support (2), i.e. its situation next to the area where the light is transmitted towards the vehicle passenger compartment, permits the projection of the luminous motif (5) onto the front side (3.4) of the decorative covering (3) without the luminous motif (5) defined through the mask (3.3) losing hardly any sharpness.

On the other hand, the motif (5) which occupies the surface (5.1) delimited and depicted by means of a broken line in Figure 1, as already mentioned above, is formed by means of the combination of a the luminous areas (5.1.1), which match the first area (3.3.1) of the mask (3.3) which permits the passage of light, and the non-luminous areas (5.1.2), which match the second area (3.3.2) of the mask (3.3) that prevents the passage of light.

Thus, the luminous motif (5) is defined and projected onto the decorative covering (3) only when the luminous support (2.10) is in an on state emitting light, as shown e.g. in Figure 1.

On the other hand, the decorative covering (3) comprises a transparent support (3.2, 3.6) defining the shape of the decorative covering (3) and acting as the support for the other components that make it up.

The transparent support (3.2, 3.6) comprises a front side (3.2.1, 3.6.1) closest to the vehicle passenger compartment and a rear side (3.2.2, 3.6.2) farthest from the vehicle passenger compartment.

As already mentioned, when we refer to transparency we refer to transparency to the visible light, and it must be understood as a property of the material that allows objects to be seen clearly therethrough.

Therefore, the fact that the transparent support (3.2, 3.6) does not diffuse the light that goes therethrough allows arranging the mask (3.3) on both the front side (3.2.1, 3.6.1) thereof and its rear side (3.2.2, 3.6.2) and, at the same time, to maintain the sharpness of the luminous motif (5) projected onto the front side (3.4) of the decorative covering (3). Thus, the decorative covering is a versatile element that offers a large number of design possibilities.

Furthermore, the decorative covering (3) in the part closest to the vehicle interior comprises a light-transmitting decorative element (3.1, 3.6).

Said light-transmitting decorative element (3.1, 3.6) comprises a front side (3.1.1, 3.6.1) closest to the vehicle passenger compartment and a rear side (3.1.2, 3.6.2) farthest from the vehicle passenger compartment, wherein said front side (3.1.1, 3.6.1) of the light-transmitting decorative element (3.1, 3.6) coincides with the front side (3.4) of the decorative covering (3).

This light-transmitting decorative element (3.1, 3.6) is also transparent to visible light according to the definition given above, i.e. it allows objects to be seen clearly therethrough.

The light-transmitting decorative element (3.1, 3.6) has a first opaque appearance when the luminous support (2) is in an off state and a second transparent appearance when said luminous support (2) is in an on state.

Therefore, when the luminous support (2) is in an off state, said light-transmitting decorative element (3.1, 3.6) behaves like an opaque element, thereby allowing both the mask (3.3) and the lighting device (2.10) to be concealed, and when said luminous support (2) is in an on state emitting light, said light-transmitting decorative element (3.1, 3.6) behaves like a transparent element according to the definition of transparency given above.

Figures 6A-6F show some of the preferred embodiments of the invention as regards the configuration of the structure formed by the decorative covering (3) depending on the arrangement of the different elements described above that make up said decorative covering (3).

In particular, Figure 6A shows an embodiment wherein the transparent support (3.2) and the light-transmitting decorative element (3.1) are formed on a single light-transmitting decorative support element (3.6). Therefore, said light-transmitting decorative support element (3.6) defines the shape of the decorative covering (3) and acts as a support for the rest of the components that make up said decorative covering (3), and, in addition, it has an opaque appearance when the luminous support (2) is in an off state such that it allows both the mask (3.3) and the lighting device (2.10) to be concealed.

Said light-transmitting decorative support element (3.6) may comprise e.g. a piece of transparent plastic material molded e.g. by means of a process of injection of poly(methyl methacrylate) (PMMA) or polycarbonate (PC) and colored during the process by means of the addition of additives such as smoke black to the plastic pellet that will form said light-transmitting decorative support element (3.6).

Hence, said light-transmitting decorative support element (3.6) has an opaque appearance when the luminous support (2) is in an off state and lets the light emitted by the luminous support (2) through when the latter (2) is in an on state.

In this case, the mask (3.3) is situated on the rear side (3.6.2) of the light-transmitting decorative support element (3.6).

Therefore, in this embodiment, the front side (3.6.1) of the light-transmitting decorative support element (3.6) matches the front side (3.4) of the decorative covering (3) where the luminous motif (5) is projected and is, therefore, the one the occupant of the vehicle sees.

Said mask (3.3) may be formed from an additional element, e.g. a vinyl sheet, stuck to said rear side (3.6.2) of the light-transmitting decorative support element (3.6).

On the other hand, said additional element that forms the mask (3.3) may comprise an element that can withstand the typical temperatures of an injection process, which is inserted in the mold as an insert during the process of manufacture of the light-transmitting decorative support element (3.6). Thus, once the injection process is complete, both elements (3.6, 3.3) are integrated forming a single piece.

Additionally, the mask (3.3) may be formed by over-injecting a second opaque plastic material onto the rear side (3.6.2) of the light-transmitting decorative support element (3.6) previously formed by injecting a first transparent, colored plastic material to permit an opaque appearance when the lighting device is in an off state.

In particular, said over-injection of the second opaque plastic material is carried out on localized areas of said rear side (3.6.2) of the light-transmitting decorative support element (3.6) in order to form the second area (3.3.1) of the mask (3.3) that prevents the passage of light. Therefore, the areas not comprising the second opaque plastic material match the first area (3.3.1) of the mask (3.3) that permits the passage of light.

Therefore, also in this case, once the injection process in complete, both the mask (3.3) and the light-transmitting decorative support element (3.6) are integrated forming a single piece.

On the other hand, the mask (3.3) may be formed by screen printing or painting with an opaque ink or paint the rear side (3.6.2) of the light-transmitting decorative support element (3.6) once the molding process is complete. Thus, the areas comprising opaque ink or paint match the second area (3.3.2) of the mask (3.3) preventing the passage of light and the areas not comprising opaque ink match the first area (3.3.1) of the mask (3.3) permitting the passage of light.

The configuration of the decorative covering (3) depicted in Figure 6A is particularly advantageous from the point of view of the simplicity and the versatility or adaptability of the decorative covering (3) to the different design options for the luminous motif (5) since said decorative covering (3) makes the transparent support and opaque-appearance decorative element functions fulfilled by the light-transmitting decorative support element (3.6) independent from the function carried out by the mask (3.3).

Therefore, in this case, the process of manufacture of the decorative covering (3) is simplified taking the different design options for the luminous motif (5) into consideration.

Figure 6B shows an embodiment wherein the transparent decorative support (3.2) and the light-transmitting decorative element (3.1) are formed like two independent elements.

First of all, the transparent support (3.2) defines the shape of the decorative covering (3) and acts as a support for the rest of the components that make up said decorative covering (3). Said elements may comprise e.g. a piece of transparent plastic material molded from poly(methyl methacrylate) (PMMA) or polycarbonate (PC).

Secondly, the light-transmitting decorative element (3.1) comprises a thin layer that is transparent according to the definition given above.

Said thin layer may be formed e.g. by means of the deposition of metal particles onto the front side (3.2.1) of the transparent support (3.2). Therefore, in this case, the outer appearance of the decorative covering (3) is metallic.

In this configuration of the decorative covering (3) depicted in Figure 6B, as in the previously described configuration depicted in Figure 6A, the mask (3.3) is situated on the rear side (3.2.2) of the transparent support (3.2).

Said mask (3.3) may be formed according to any of the processes described above with regard to the embodiment depicted in Figure 6A, keeping in mind that in this case the element onto which the mask (3.3) is applied is the transparent support (3.2) and, in particular, the rear side (3.2.2) thereof.

As the embodiment depicted in Figure 6A, this embodiment of the decorative covering (3) permits different design options as regards the configuration of the luminous motif (5) formed via the mask (3.3), since said mask (3.3) may be applied onto the assembly formed by the transparent support (3.2) and the light-transmitting decorative element (3.1) and, in particular, onto the rear side (3.2.2) of the transparent support (3.2).

Therefore, in this case, the decorative covering (3) also makes the transport support and opaque-appearance decorative element functions independent from the function carried out by the mask (3.3), which allows the process of manufacture of the decorative covering (3) to be simplified taking into account the different design options for the luminous motif (5).

Figure 6C shows an embodiment wherein the mask (3.3) where the motif (5) is formed is between the light-transmitting decorative element (3.1) and the transparent support (3.2).

Said mask (3.3) may be formed according to any of the processes described above corresponding to the embodiment depicted in Figure 6A, keeping in mind that in this case the element onto which the mask (3.3) is applied may be either the transparent support (3.2), and in particular the front side (3.2.1) thereof, or the light-transmitting decorative element (3.1), and in particular the rear side (3.1.1) thereof.

This last described embodiment of the decorative covering (3) is not as advantageous from the point of view of the simplicity and the versatility or adaptability of the decorative covering (3) to the different design options for the luminous motif (5) since, as the mask (3.3) is between the transparent support (3.2) and the light-transmitting decorative element (3.1), the process of manufacture of said decorative covering (3) becomes more complicated in order for the latter to be adapted to the different design options for the luminous motif (5).

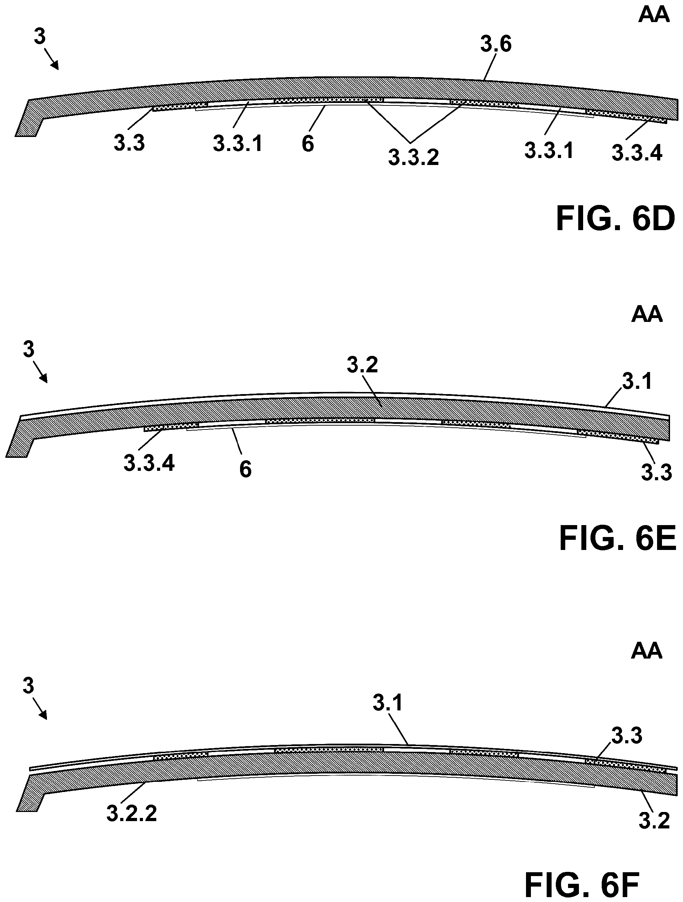

Finally, Figures 6D, 6E and 6F show three variants of the decorative covering (3) depicted in Figures 6A, 6B and 6C, wherein diffusion means (6), whose configurations are explained in more detail below, have been added.

Therefore, in addition to the components described up to now, the luminous decorative assembly (1) of the invention comprises light diffusion means (6) whose function is to distribute the light in a more homogenous way once the latter has been extracted from the light guide (2.3) via the light extraction means (2.6) .

As a result of said homogenization or diffusion of the light, it is possible to conceal the lighting device (2.10), which is susceptible of being visible for the occupant through the first area (3.3.1) permitting the passage of light of the mask (3.3) when the lighting device (2.10) is in an on state.

In particular, the light diffusion means (6) conceal the position of the light extraction means (2.6) where the point fluxes of light beams, or 'hot spots', concentrate by diffusing said light beams before the passage of light through the mask (3.3) takes place.

Thus, only the light directly transmitted by the light guide (2.3) is diffused and not the light transmitted by the mask (3.3).

Figures 4, 6D, 6E and 6F show variants of the invention wherein the light diffusion means (6) are part of the decorative covering (3), and Figures 5, 7D, 7E and 7F show variants of the invention wherein the light diffusion means (6) are part of the luminous support (2) .

Firstly, Figure 4 shows a view of the section CC depicted in Figure 3, where the variant wherein the light diffusion means (6) are part of the decorative covering (3) is shown; in the particular case depicted in Figure 4, they are joined to the rear side (3.5) of the decorative covering (3).

The views of the section AA depicted in Figure 1 corresponding to Figures 6D, 6E and 6F show three particular embodiments wherein said diffusion means (6) are part of the decorative covering (3).

In particular, Figure 6D shows a schematic sectional view of the decorative covering (3) which depicts the variant depicted in Figure 6A, wherein the light diffusion means (6) have been added to the rear side (3.3.4) of the mask (3.3).

Figure 6E shows a schematic sectional view of the decorative covering (3) which depicts the variant described in Figure 6B, wherein the light diffusion means (6) have also been added to the rear side (3.3.4) of the mask (3.3).

Figure 6F shows a schematic sectional view of the decorative covering (3) which depicts the variant depicted in Figure 6C, wherein the light diffusion means (6) have been added to the rear side (3.2.2) of the transparent support (3.2) in correspondence with the mask (3.3) .

In this latter case, and although it has not been depicted, the diffusion means (6) could also be situated in contact with the rear side (3.3.4) of the mask (3.3) situated between the light-transmitting decorative element (3.1) and the transparent support (3.2) .

For the cases described above wherein the light diffusion means (6) are situated on the decorative covering (3), they may comprise e.g. a diffusing element that continuously extends along the rear side (3.5) of the decorative covering (3), and particularly on the rear side (3.3.4) of the mask (3.3), according to the variants depicted in figures 6D and 6E, or on the rear side (3.2.2) of the transparent support (3.2), according to the variant depicted in Figure 6F, or a diffusing element that discontinuously extends in correspondence with at least the first area (3.3.1) of the mask (3.3) that permits the passage of light, according to an embodiment which has not been depicted, and that extends along the rear side (3.2.2) of the transparent support (3.2) or along the rear side (3.3.4) of the mask (3.3).

On the other hand, Figure 5 shows a view of the section CC depicted in Figure 3, where the variant wherein the light diffusion means (6) are part of the decorative covering (2) is shown; in the particular case depicted in Figure 5, they are joined to the front side (2.7) of the luminous support (2).

The views of the section BB depicted in Figure 2 corresponding to Figures 7D-7F show two particular embodiments wherein said diffusion means are part of the luminous support (2).

In particular, Figure 7D shows a schematic sectional view of the luminous support (2) wherein the latter comprises light diffusion means (6) joined via fourth attachment means (8) to the front side (2.3.1) of the light guide (2.3).

According to this embodiment, the light diffusion means (6) continuously extend along the front side (2.3.1) of the light guide (2.3), and particularly along the area of the front side (2.3.1) of the light guide (2.3) situated in correspondence with the mask (3.3) of the decorative covering (3).

Figure 7E shows a detailed view of Figure 7D, where the joint between the light diffusion means (6) to the front side (2.3.1) of the light guide (2.3) via the fourth attachment means (8) is shown, such that the contact between said light diffusion means (6) and the light guide (2.3) via the fourth attachment means (8) is discontinuous and point-like in order to promote the presence of air (9) between both components (2.3, 6) and thus foster the total internal reflection phenomenon of the light guide (2.3).

In this case, the light diffusion means (6) may comprise e.g. a diffusing element that continuously extends along the front side (2.3.1) of the light guide (2.3) in correspondence with the mask (3.3) situated on the decorative covering (3) or may comprise, as Figure 7F shows, a diffusing element that discontinuously extends along the front side (2.3.1) of the light guide (2.3) in correspondence with the first area (3.3.1) of the mask (3.3) that permits the passage of light.

## Claims

1. Luminous decorative assembly for vehicle interior which operates between an on state, wherein it shows a luminous motif (5) that occupies a surface (5.1) formed by the combination of luminous areas (5.1.1) and non-luminous areas (5.1.2), and an off state, wherein said luminous decorative assembly (1) comprises:
- a luminous support (2) which in turn comprises a front side (2.7) closest to the vehicle passenger compartment and a rear side (2.8) farthest from the vehicle passenger compartment, wherein said front and rear sides (2.7, 2.8) are joined together along a contour (2.9) of the luminous support (2) that delimits said front and rear sides (2.7, 2.8) of the luminous support (2), wherein said luminous support (2) operates between an on state and an off state corresponding to the on and off states of the luminous decorative assembly (1),
- a decorative covering (3) comprising a front side (3.4) closest to the vehicle passenger compartment, onto which the motif is projected, and a rear side (3.5) farthest from the vehicle passenger compartment, wherein said decorative covering (3) has an opaque appearance when the luminous support (2) is in its off state,
wherein the luminous support (2) is joined to the decorative covering (3) via first attachment means (4), such that that rear side (3.5) of the decorative covering (3) is facing the front side (2.7) of the luminous support (2),
- the luminous support (2) also comprises:
• a support (2.1) comprising a front side (2.1.2) closest to the vehicle passenger compartment, and a rear side (2.1.3) farthest from the vehicle passenger compartment, wherein said support (2.1) comprises second attachment means (2.1.1) for attaching the luminous decorative assembly (1) to the vehicle interior, such that the support (2.1) supports the other components that make up the luminous decorative assembly (1),
• a lighting device (2.10) situated on the front side (2.1.2) of the support (2.1), wherein said lighting device (2.10) comprises:
∘ at least one LED (2.2) as a light source whose position is not in correspondence with the luminous areas (5.1.1) of the surface (5.1) occupied by the luminous motif (5),
∘ at least one light guide (2.3) for uniformly distributing the light from said LED (2.2), which extends at least along the surface (5.1) occupied by the luminous motif (5), wherein said light guide (2.3) comprises a front side (2.3.1) closest to the vehicle passenger compartment and a rear side (2.3.2) farthest from the vehicle passenger compartment, wherein said front and rear sides (2.3.1, 2.3.2) are joined together along a contour (2.3.3) of the light guide delimiting said front and rear sides (2.3.1, 2.3.2) of the light guide (2.3),
∘ means (2.6) for extracting the light distributed through the light guide (2.3), situated on the rear side (2.3.2) of the light guide (2.3), which permit the transmission of the light through the front side (2.3.1) of the light guide (2.3) towards the decorative covering (3),
• means (2.4) for recovering the light escaping through the rear side (2.3.2) of the light guide (2.3), situated on the front side (2.1.2) of the support (2.1),
• light retaining means (2.5) that prevent the emission of light through the contour (2.9) of the luminous support (2),
- the decorative covering (3) also comprises:
• a mask (3.3) comprising a motif (5) defined by means of at least two areas, a first area (3.3.1) of the mask (3.3) permitting the passage of light therethrough, which matches the luminous areas (5.1.1) of the surface (5.1) occupied by the luminous motif (5), and a second area (3.3.2) of the mask (3.3) that prevents the passage of light therethrough and matches the non-luminous areas (5.1.2) of the surface (5.1) occupied by the luminous motif (5), such that the motif (5) is defined by means of the combination of said first area (3.3.1) of the mask (3.3) and said second area (3.3.2) of the mask (3.3), and is shown through the decorative covering (3) only when the luminous support (2) is in an on state, wherein said mask (3.3) comprises a front side (3.3.3) closest to the vehicle passenger compartment and a rear side (3.3.4) farthest from the vehicle passenger compartment,
• a transparent support (3.2, 3.6) defining the shape of the decorative covering (3) and acting as a support for the rest of the components that make up said decorative covering (3),
• a light-transmitting decorative element (3.1) which has an opaque appearance when the luminous support (2) is in an off state and which shows therethrough the luminous motif (5) defined through the mask (3.3) when the luminous support (2) is in an on state, and which comprises a front side (3.1.1) closest to the vehicle passenger compartment and a rear side (3.1.2) farthest from the vehicle passenger compartment, wherein said front side of the light-transmitting decorative element (3.1.1) coincides with the front side (3.4) of the decorative covering (3),
wherein the light guide (2.3) and the decorative covering (3) are not in contact at least along an area of the front side (2.3.1) of the light guide (2.3) situated in correspondence with the light extraction means (2.6),
wherein the light guide (2.3) and the support (2.1) are joined via third attachment means (7) such that there is air (9) between said light guide (2.3) and said support (2.1),
wherein the mask (3.3) is in contact with the transparent support (3.2, 3.6) and/or the light-transmitting decorative element (3.1, 3.6),
and wherein the luminous decorative assembly (1) also comprises light diffusion means (6) situated between the mask (3.3) and the light guide (2.3) and in correspondence with at least the first area (3.3.1) of the mask (3.3) which permits the passage of light therethrough,
**characterized in that**
the light guide (2.3) and the support (2.1) are only in contact along the rear side (2.3.2) of said light guide (2.3) in the areas corresponding to the attachment of both elements carried out via the third attachment means (7).

2. Luminous decorative assembly for vehicle interior according to Claim 1, wherein the light diffusion means (6) are part of the decorative covering (3).

3. Luminous decorative assembly for vehicle interior according to Claim 1, wherein the light diffusion means are part of the luminous support (2).

4. Luminous decorative assembly for vehicle interior according to Claim 3, wherein the light diffusion means (6) and the light guide (2.3) are joined via fourth attachment means (8), such that the contact between said light diffusion means (6) and the light guide (2.3) via the fourth attachment means (8) is discontinuous and point-like in order to foster the presence of air (9) between both components (2.3, 6).

5. Luminous decorative assembly for vehicle interior according to Claim 1, wherein the LED (2.2) is of the side emission type.

6. Luminous decorative assembly for vehicle interior according to Claim 1, wherein the LED (2.2) is of the front emission type.

7. Luminous decorative assembly for vehicle interior according to Claim 1, wherein the luminous decorative assembly (1) further comprises a lighting module (11) which houses both a printed circuit board (10), or PCB, and the at least one LED (2.2) and wherein said lighting module (11) is coupled to the light guide (2.3) via a connector (12) which has the capacity to conduct the light therethrough until it reaches the light guide (2.3) in charge of distributing it.

8. Luminous decorative assembly for vehicle interior according to Claim 7, wherein the connector (12) comprises a prismatic or cylindrical light guide that permits the total internal reflection of the light.

9. Luminous decorative assembly for vehicle interior according to Claim 8, wherein the connector (12) has on its end closest to the light guide (2.3) a curved section (12.1) for directing the light towards the light guide (2.3).

10. Luminous decorative assembly for vehicle interior according to Claim 1, wherein the lighting device (2.10) comprises two LEDs (2.2), each of which is in correspondence with each of the opposite ends of the light guide (2.3).

11. Luminous decorative assembly for vehicle interior according to Claim 1, wherein the light retaining means (2.5) are situated on the contour (2.3.3) of the light guide (2.3).

12. Luminous decorative assembly for vehicle interior according to Claim 1, wherein the light retaining means (2.5) are located on the inner side of the contour (2.1.4) of the support (2.1) on a wall (2.1.5) projecting towards the decorative covering (3) and partially enveloping the contour (2.3.3) of the light guide (2.3).

## Patentansprüche

1. Leuchtende Zieranordnung für einen Fahrzeuginnenraum, die zwischen einem eingeschalteten Zustand, in dem sie ein leuchtendes Motiv (5) zeigt, das eine Fläche (5.1) einnimmt, die durch die Kombination von leuchtenden Flächen (5.1.1) und nicht leuchtenden Flächen (5.1.2) gebildet wird, und einem ausgeschalteten Zustand arbeitet, wobei die leuchtende Zieranordnung (1) Folgendes umfasst:
- einen leuchtenden Träger (2), der seinerseits eine dem Fahrzeuginsassenraum am nächsten gelegene Vorderseite (2.7) und eine vom Fahrzeuginsassenraum am weitesten entfernte Rückseite (2.8) umfasst, wobei die Vorder- und die Rückseite (2.7, 2.8) entlang einer Kontur (2.9) des leuchtenden Trägers (2), die die Vorder- und die Rückseite (2.7, 2.8) des Leuchtende Trägers (2) begrenzt, miteinander verbunden sind, wobei der leuchtende Träger (2) zwischen einem eingeschalteten Zustand und einem ausgeschalteten Zustand arbeitet, die jeweils dem eingeschalteten und dem ausgeschalteten Zustand der leuchtenden Zieranordnung (1) entsprechen,
- eine Zierabdeckung (3), die eine dem Fahrzeuginsassenraum am nächsten gelegene Vorderseite (3.4) und eine vom Fahrzeuginsassenraum am weitesten entfernte Rückseite (3.5) umfasst, wobei die Zierabdeckung (3) ein undurchsichtiges Erscheinungsbild aufweist, wenn der leuchtende Träger (2) im ausgeschalteten Zustand ist,
wobei der leuchtende Träger (2) über erste Befestigungsmittel (4) derart mit der Zierabdeckung (3) verbunden ist, dass die Rückseite (3.5) der Zierabdeckung (3) der Vorderseite (2.7) des leuchtenden Trägers (2) zugewandt ist,
- der leuchtende Träger (2) auch Folgendes umfasst:
• einen Träger (2.1), der eine dem Fahrzeuginsassenraum am nächsten gelegene Vorderseite (2.1.2) und eine vom Fahrzeuginsassenraum am weitesten entfernte Rückseite (2.1.3) umfasst, wobei der Träger (2.1) zweite Befestigungsmittel (2.1.1) zum Befestigen der leuchtenden Zieranordnung (1) an dem Fahrzeuginnenraum umfasst, so dass der Träger (2.1) die anderen Komponenten trägt, aus denen die leuchtende Zieranordnung (1) besteht,
• eine Beleuchtungsvorrichtung (2.10), die an der Vorderseite (2.1.2) des Trägers (2.1) angeordnet ist, wobei die Beleuchtungsvorrichtung (2.10) Folgendes umfasst:
∘ mindestens eine LED (2.2) als Lichtquelle, deren Position nicht den vom leuchtenden Motiv (5) eingenommenen leuchtenden Bereichen (5.1.1) der Fläche (5.1) entspricht,
∘ mindestens einen Lichtleiter (2.3) zum gleichmäßigen Verteilen des Lichts von der LED (2.2), das sich mindestens entlang der von dem leuchtenden Motiv (5) eingenommenen Fläche (5.1) erstreckt, wobei der Lichtleiter (2.3) eine dem Fahrzeuginsassenraum am nächsten gelegene Vorderseite (2.3.1) und eine vom Fahrzeuginsassenraum am weitesten entfernte Rückseite (2.3.2) umfasst, wobei die Vorder- und die Rückseite (2.3.1, 2.3.2) entlang einer Kontur (2.3.3) des Lichtleiters, der die Vorder- und die Rückseite (2.3.1, 2.3.2) des Lichtleiters (2.3) begrenzt, miteinander verbunden sind,
∘ Mittel (2.6) zum Abziehen des Lichtleiters (2.3) verteilten Lichts, die auf der Rückseite (2.3.2) des Lichtleiters (2.3) angeordnet sind und die Übertragung des Lichts durch die Vorderseite (2.3.1) des Lichtleiters (2.3) hindurch hin zu der Zierabdeckung (3) zulassen,
• Mittel (2.4) zum Rückgewinnen des durch die Rückseite (2.3.2) des Lichtleiters (2.3) hindurch entweichenden Lichts, die auf der Vorderseite (2.1.2) des Trägers (2.1) angeordnet sind,
• Lichthaltemittel (2.5), die das Austreten von Licht durch die Kontur (2.9) des leuchtenden Trägers (2) hindurch verhindern,
- die Zierabdeckung (3) auch Folgendes umfasst:
• eine Maske (3.3), die ein Motiv (5) umfasst, das durch mindestens zwei Bereiche definiert ist: einen ersten Bereich (3.3.1) der Maske (3.3), der das Hindurchtreten von Licht hiedurch ermöglicht und zu den leuchtenden Bereichen (5.1.1) der von dem leuchtenden Motiv (5) eingenommenen Fläche (5.1) passt, und einen zweiten Bereich (3.3.2) der Maske (3.3), der das Hindurchtreten von Licht hiedurch verhindert und zu den nicht leuchtenden Bereichen (5.1.2) der von dem Leuchtmotiv (5) eingenommenen Fläche (5.1) passt, so dass das Motiv (5) mittels die Kombination des ersten Bereichs (3.3.1) der Maske (3.3) und des zweiten Bereichs (3.3.2) der Maske (3.3) definiert ist nur dann durch die Zierabdeckung (3) hindurch gezeigt wird, wenn der leuchtende Träger (2) in einem eingeschalteten Zustand ist, wobei die Maske (3.3) eine dem Fahrzeuginsassenraum am nächsten gelegene Vorderseite (3.3.3) und eine vom Fahrzeuginsassenraum am weitesten entfernte Rückseite (3.3.4) umfasst,
• einen durchsichtigen Träger (3.2, 3.6), der die Form der Zierabdeckung (3) definiert und als Träger für die übrigen Komponenten dient, aus denen die Zierabdeckung (3) besteht,
• ein lichtdurchlässiges Zierelement (3.1), das ein undurchsichtiges Erscheinungsbild aufweist, wenn der leuchtende Träger (2) in einem ausgeschalteten Zustand ist, und das hiedurch das durch die Maske (3.3) definierte leuchtende Motiv (5) zeigt, wenn der leuchtende Träger (2) in einem eingeschalteten Zustand ist, und das eine dem Fahrzeuginsassenraum am nächsten gelegene Vorderseite (3.1.1) und eine vom Fahrzeuginsassenraum am weitesten entfernte Rückseite (3.1.2) umfasst, wobei die Vorderseite des lichtdurchlässigen Zierelements (3.1.1) mit der Vorderseite (3.4) der Zierabdeckung (3) zusammenfällt,
wobei der Lichtleiter (2.3) und die Zierabdeckung (3) mindestens entlang eines Bereichs der Vorderseite (2.3.1) des Lichtleiters (2.3), der entsprechend den Lichtabzugsmitteln (2.6) angeordnet ist, nicht in Kontakt sind,
wobei der Lichtleiter (2.3) und der Träger (2.1) über dritte Befestigungsmittel (7) so verbunden sind, dass Luft (9) zwischen dem Lichtleiter (2.3) und dem Träger (2.1) ist,
wobei die Maske (3.3) mit dem durchsichtigen Träger (3.2, 3.6) und/oder dem lichtdurchlässigen Zierelement (3.1, 3.6) in Kontakt ist
und wobei die leuchtende Zieranordnung (1) auch Lichtstreumittel (6) umfasst, die zwischen der Maske (3.3) und dem Lichtleiter (2.3) angeordnet sind und mindestens dem ersten Bereich (3.3.1) der Maske (3.3) entsprechen, der das Hindurchtreten von Licht hiedurch zulässt,
**dadurch gekennzeichnet, dass**
der Lichtleiter (2.3) und der Träger (2.1) nur entlang der Rückseite (2.3.2) des Lichtleiters (2.3) in den Bereichen, die der Befestigung beider Elemente entsprechen, die über das dritte Befestigungsmittel (7) vorgenommen wird, in Kontakt sind.

2. Leuchtende Zieranordnung für einen Fahrzeuginnenraum nach Anspruch 1, wobei die Lichtstreumittel (6) Teil der Zierabdeckung (3) sind.

3. Leuchtende Zieranordnung für einen Fahrzeuginnenraum nach Anspruch 1, wobei die Lichtstreumittel Teil des leuchtenden Trägers (2) sind.

4. Leuchtende Zieranordnung für einen Fahrzeuginnenraum nach Anspruch 3. wobei die Lichtstreumittel (6) und der Lichtleiter (2.3) über vierte Befestigungsmittel (8) derart verbunden sind, dass der Kontakt zwischen den Lichtstreumitteln (6) und dem Lichtleiter (2.3) über das vierte Befestigungsmittel (8) unterbrochen und punktuell ist, um das Vorhandensein von Luft (9) zwischen beiden Bauteilen (2.3.6) zu fördern.

5. Leuchtende Zieranordnung für einen Fahrzeuginnenraum nach Anspruch 1, wobei die LED (2.2) dem Typ mit seitlichem Austreten angehört.

6. Leuchtende Zieranordnung für einen Fahrzeuginnenraum nach Anspruch 1, wobei die LED (2.2) dem Typ mit vorderem Austreten angehört.

7. Leuchtende Zieranordnung für einen Fahrzeuginnenraum nach Anspruch 1, wobei die leuchtende Zieranordnung (1) ferner ein Beleuchtungsmodul (11) umfasst, das sowohl eine Leiterplatte (10) oder Platine als auch die mindestens eine LED (2.2) beherbergt, und wobei das Beleuchtungsmodul (11) über einen Verbinder (12) mit dem Lichtleiter (2.3) gekoppelt ist, der in der Lage ist, das Licht hiedurch durchzuleiten, bis es den für seine Verteilung zuständigen Lichtleiter (2.3) erreicht.

8. Leuchtende Zieranordnung für einen Fahrzeuginnenraum nach Anspruch 7, wobei der Verbinder (12) einen prismaförmigen oder zylindrischen Lichtleiter umfasst, der die gesamte innere Reflexion des Lichts zulässt.

9. Leuchtende Zieranordnung für einen Fahrzeuginnenraum nach Anspruch 8, wobei der Verbinder (12) an seinem dem Lichtleiter (2.3) am nächsten gelegenen Ende einen gekrümmten Abschnitt (12.1) zum Lenken des Lichts hin zu dem Lichtleiter (2.3) aufweist.

10. Leuchtende Zieranordnung für einen Fahrzeuginnenraum nach Anspruch 1, wobei die Beleuchtungsvorrichtung (2.10) zwei LED (2.2) aufweist, die jeweils den gegenüberliegenden Enden des Lichtleiters (2.3) entsprechen.

11. Leuchtende Zieranordnung für einen Fahrzeuginnenraum nach Anspruch 1, wobei die Lichthaltemittel (2.5) an der Kontur (2.3.3) des Lichtleiters (2.3) angeordnet sind.

12. Leuchtende Zieranordnung für einen Fahrzeuginnenraum nach Anspruch 1, wobei sich die Lichthaltemittel (2.5) auf der Innenseite der Kontur (2.1.4) des Trägers (2.1) an einer Wand (2.1.5) befinden, die hin zu der Zierabdeckung (3) vorragt und die Kontur (2.3.3) des Lichtleiters (2.3) teilweise umhüllt.

## Revendications

1. Ensemble décoratif lumineux pour intérieur de véhicule qui fonctionne entre un état allumé, dans lequel il présente un motif lumineux (5) qui occupe une surface (5.1) formée par la combinaison de zones lumineuses (5.1.1) et de zones non lumineuses (5.1.2) et un état éteint, dans lequel ledit ensemble décoratif lumineux (1) comprend :
- un support lumineux (2) qui comprend à son tour un côté avant (2.7) le plus proche de l'habitacle du véhicule et un côté arrière (2.8) le plus éloigné de l'habitacle du véhicule, lesdits côtés avant et arrière (2.7, 2.8) étant reliés le long d'un contour (2.9) du support lumineux (2) délimitant lesdits côtés avant et arrière (2.7, 2.8) du support lumineux (2), ledit support lumineux (2) fonctionnant entre un état allumé et un état éteint correspondant aux états allumé et éteint de l'ensemble décoratif lumineux (1),
- un revêtement décoratif (3) comprenant un côté avant (3.4) le plus proche de l'habitacle du véhicule, sur lequel le motif est projeté et un côté arrière (3.5) le plus éloigné de l'habitacle du véhicule, ledit revêtement décoratif (3) ayant un aspect opaque lorsque le support lumineux (2) est dans son état éteint,
dans lequel le support lumineux (2) est relié au revêtement décoratif (3) par l'intermédiaire d'un premier moyen de fixation (4), de telle sorte que le côté arrière (3.5) du revêtement décoratif (3) fasse face au côté avant (2.7) du support lumineux (2),
- le support lumineux (2) comprend également :
• un support (2.1) comprenant un côté avant (2.1.2) le plus proche de l'habitacle du véhicule et un côté arrière (2.1.3) le plus éloigné de l'habitacle du véhicule, ledit support (2.1) comprenant un second moyen de fixation (2.1.1) pour fixer l'ensemble décoratif lumineux (1) à l'intérieur du véhicule, de telle sorte que le support (2.1) supporte les autres composants constituant l'ensemble décoratif lumineux (1),
• un dispositif d'éclairage (2.10) situé sur le côté avant (2.1.2) du support (2.1), ledit dispositif d'éclairage (2.10) comprenant :
∘ au moins une LED (2.2) en tant que source de lumière dont la position n'est pas en correspondance avec les zones lumineuses (5.1.1) de la surface (5.1) occupée par le motif lumineux (5),
∘ au moins un guide de lumière (2.3) pour répartir uniformément la lumière provenant de ladite LED (2.2), qui s'étend au moins le long de la surface (5.1) occupée par le motif lumineux (5), ledit guide de lumière (2.3) comprenant un côté avant (2.3.1) le plus proche de l'habitacle du véhicule et un côté arrière (2.3.2) le plus éloigné de l'habitacle du véhicule, lesdits côtés avant et arrière (2.3.1, 2.3.2) étant réunis le long d'un contour (2.3 .3) du guide de lumière délimitant lesdits côtés avant et arrière (2.3.1, 2.3.2) du guide de lumière (2.3),
∘ des moyens (2.6) pour extraire la lumière distribuée à travers le guide de lumière (2.3), situés sur le côté arrière (2.3.2) du guide de lumière (2.3), permettant la transmission de la lumière par le côté avant (2.3.1) du guide de lumière (2.3) en direction du revêtement décoratif (3),
• des moyens (2.4) pour récupérer la lumière s'échappant par le côté arrière (2.3.2) du guide de lumière (2.3), situés sur le côté avant (2.1.2) du support (2.1),
• des moyens de rétention de lumière (2.5) empêchant l'émission de lumière à travers le contour (2.9) du support lumineux (2),
- le revêtement décoratif (3) comprend également :
• un masque (3.3) comprenant un motif (5) défini au moyen d'au moins deux zones, une première zone (3.3.1) du masque (3.3) permettant le passage de la lumière à travers celle-ci, qui correspond aux zones lumineuses (5.1.1) de la surface (5.1) occupée par le motif lumineux (5) et une deuxième zone (3.3.2) du masque (3.3) empêchant le passage de la lumière et correspondant aux zones non lumineuses (5.1.2) de la surface (5.1) occupée par le motif lumineux (5), de telle sorte que le motif (5) soit défini au moyen de la combinaison de ladite première zone (3.3.1) du masque (3.3) et de ladite deuxième zone (3.3 .2) du masque (3.3) et soit visible à travers le revêtement décoratif (3) uniquement lorsque le support lumineux (2) est dans un état allumé, ledit masque (3.3) comprenant un côté avant (3.3.3) le plus proche de l'habitacle du véhicule et un côté arrière (3.3.4) le plus éloigné de l'habitacle du véhicule,
• un support transparent (3.2, 3.6) définissant la forme du revêtement décoratif (3) et servant de support pour le reste des composants qui constituent ledit revêtement décoratif (3),
• un élément décoratif transmettant la lumière (3.1) qui a un aspect opaque lorsque le support lumineux (2) est dans un état éteint et qui laisse apparaître le motif lumineux (5) défini à travers le masque (3.3) lorsque ce support lumineux (2) est dans un état allumé et comprend un côté avant (3.1.1) le plus proche de l'habitacle du véhicule et un côté arrière (3.1.2) le plus éloigné de l'habitacle du véhicule, ledit côté avant de l'élément décoratif transmettant la lumière (3.1.1) coïncidant avec le côté avant (3.4) du revêtement décoratif (3),
le guide de lumière (2.3) et le revêtement décoratif (3) n'étant pas en contact au moins le long d'une zone du côté avant (2.3.1) du guide de lumière (2.3) située en correspondance avec les moyens d'extraction de lumière (2.6),
le guide de lumière (2.3) et le support (2.1) étant reliés par un troisième moyen de fixation (7) de telle sorte qu'il y ait de l'air (9) entre ledit guide de lumière (2.3) et ledit support (2.1),
le masque (3.3) étant en contact avec le support transparent (3.2, 3.6) et/ou l'élément décoratif transmettant la lumière (3.1, 3.6),
et l'ensemble décoratif lumineux (1) comprenant également des moyens de diffusion de la lumière (6) situés entre le masque (3.3) et le guide de lumière (2.3) et en correspondance avec au moins la première zone (3.3.1) du masque (3.3) qui permet le passage de la lumière,
**caractérisé en ce que**
le guide de lumière (2.3) et le support (2.1) ne sont en contact le long du côté arrière (2.3.2) dudit guide de lumière (2.3) que dans les zones correspondant à la fixation des deux éléments réalisée via le troisième moyen de fixation (7).

2. Ensemble décoratif lumineux pour intérieur de véhicule selon la revendication 1, dans lequel les moyens de diffusion de la lumière (6) font partie du revêtement décoratif (3).

3. Ensemble décoratif lumineux pour intérieur de véhicule selon la revendication 1, dans lequel les moyens de diffusion de la lumière font partie du support lumineux (2).

4. Ensemble décoratif lumineux pour intérieur de véhicule selon la revendication 3, dans lequel les moyens de diffusion de la lumière (6) et le guide de lumière (2.3) sont reliés par l'intermédiaire d'un quatrième moyen de fixation (8), de sorte que le contact entre lesdits moyens de diffusion de la lumière (6) et le guide de lumière (2.3) par l'intermédiaire du quatrième moyen de fixation (8) soit discontinu et ponctuel afin de favoriser la présence d'air (9) entre les deux composants (2.3, 6).

5. Ensemble décoratif lumineux pour intérieur de véhicule selon la revendication 1, dans lequel la DEL (2.2) est du type à émission latérale.

6. Ensemble décoratif lumineux pour intérieur de véhicule selon la revendication 1, dans lequel la DEL (2.2) est du type à émission frontale.

7. Ensemble décoratif lumineux pour intérieur de véhicule selon la revendication 1, dans lequel l'ensemble décoratif lumineux (1) comprend en outre un module d'éclairage (11) qui contient à la fois une carte de circuit imprimé (10) ou PCB et l'au moins une LED (2.2) et dans lequel ledit module d'éclairage (11) est couplé au guide de lumière (2.3) par le biais d'un connecteur (12) qui a la capacité de conduire la lumière à travers celui-ci jusqu'à ce qu'elle atteigne le guide de lumière (2.3) chargé de la distribuer.

8. Ensemble décoratif lumineux pour intérieur de véhicule selon la revendication 7, dans lequel le connecteur (12) comprend un guide de lumière prismatique ou cylindrique qui permet la réflexion interne totale de la lumière.

9. Ensemble décoratif lumineux pour intérieur de véhicule selon la revendication 8, dans lequel le connecteur (12) présente à son extrémité la plus proche du guide de lumière (2.3) une section incurvée (12.1) pour diriger la lumière vers le guide de lumière (2.3).

10. Ensemble décoratif lumineux pour intérieur de véhicule selon la revendication 1, dans lequel le dispositif d'éclairage (2.10) comprend deux LED (2.2) dont chacune correspond à chacune des extrémités opposées du guide de lumière (2.3).

11. Ensemble décoratif lumineux pour intérieur de véhicule selon la revendication 1, dans lequel les moyens de retenue de la lumière (2.5) sont situés sur le contour (2.3.3) du guide de lumière (2.3).

12. Ensemble décoratif lumineux pour intérieur de véhicule selon la revendication 1, dans lequel les moyens de retenue de la lumière (2.5) sont situés du côté interne du contour (2.1.4) du support (2.1) sur une paroi (2.1.5) faisant saillie vers le revêtement décoratif (3) et enveloppant partiellement le contour (2.3.3) du guide de lumière (2.3).
